# EUROPÄISCHE PATENTSCHRIFT

(11) **EP 0 642 451 B1**
(45) Veröffentlichungstag und Bekanntmachung des Hinweises auf die Patenterteilung: **21.05.1997**
(21) Anmeldenummer: 94908935.3
(22) Anmeldetag: 24.03.1994
(51) Int. Cl.: B65D 47/08, E05D 1/02, B29C 45/00, B29C 45/44

(54) **KUNSTSTOFFVERSCHLUSS UND VERFAHREN ZU DESSEN HERSTELLUNG**
PLASTIC CLOSURE AND METHOD FOR ITS PRODUCTION
FERMETURE EN PLASTIQUE ET PROCEDE POUR SA FABRICATION

(30) Priorität: 30.03.1993 CH 971/93
(43) Veröffentlichungstag der Anmeldung: 15.03.1995
(73) Patentinhaber: CREATECHNIC AG, CH-8305 Dietlikon (CH)
(72) Erfinder: DUBACH, Werner, Fritz, CH-8124 Maur (CH)
(74) Vertreter: Feldmann, Paul David
(86) Internationale Anmeldenummer: CH9400064
(87) Internationale Veröffentlichungsnummer: WO9422732

(56) Entgegenhaltungen:
- WO-A-93/00271
- DE-A- 1 708 448
- DE-A- 3 519 296
- GB-A- 2 225 550

## Beschreibung

Die vorliegende Erfindung betrifft einen Kunststoffverschluss gemass dem Oberbegriff des Patentanspruches 1.

Als Beispiele solcher Verschlüsse wird insbesondere auf die EP-B-0141591, EP-A-0447357 und US-A-4414705 verwiesen. Die Stabilität und Dauerhaftigkeit eines Kunststoffverschlusses wird im wesentlichen von der Gestaltung des Scharnieres bestimmt. Insbesondere bei Schnappscharnierverschlüssen ergibt sich das Problem, dass das Hauptfilmscharnier, welches die beiden miteinander gelenkig verbundenen Verschlussteile verbindet, oft nur relativ kurz ausgestaltet sein kann und zumindestens im Bereich der Federelemente, die die Schnappwirkung bewirken, unterbrochen sein muss. Beispiele für die Ausgestaltungsform solcher Schnappscharnierverschlüsse sind in den obgenannten Patentschriften beschrieben.

Bei all diesen Versionen ist jeweils das Hauptfilmscharnier durch ein mittig dazwischen angeordnetes Federelement unterbrochen und reduziert sich auf zwei beidseitig des Federelementes verbleibende Teile des Hauptfilmscharnieres. Mit Ausnahme der Variante gemäss der EP-A-0447357 ist bei allen Ausführungsformen das Hauptfilmscharnier bzw. die Teile des Hauptfilmscharnieres gegenüber dem Umfang des Verschlusses nach aussen versetzt. Neben der ästhetischen Unzulänglichkeit bewirkt dies eine erhebliche Reduktion der Länge des Hauptfilmscharnieres, und bedeutet entsprechend eine Schwächung des Scharniers und damit des gesamten Kunststoffverschlusses.

Andere Kunststoff-Verschlüssen, die erstmals von der Anmelderin auf den Markt gebracht wurden, sind mit zwei oder mehreren Federelementen in der Gestalt von Spannbändern realisiert worden. Diese Art der Kunststoff-Verschlüsse vermeiden die beidseits der Federelemente sonst erforderlichen Einschnitte und das Hauptfilmscharnier braucht nicht mehr unterbrochen zu werden. Aesthetisch vermochten aber auch diese Verschlüsse den Anforderungen des Marktes nicht zu genügen. Hinzu kam, dass die Federelemente gegenüber dem Umfang des Verschlusses vorstehend angeordnet waren und gewisse Störungen bei den automatischen Abfüll- und Schliessvorrichtungen auftraten. Diese Schwierigkeiten wurden vermieden durch einen weiterentwickelten Kunststoffverschluss gemäss der EP-B-0291457. Hier wurden die Federelemente beidseits des Hauptfilmscharnieres in die Mantelwandungen des oberen und unteren Teiles des Kunststoffverschlusses hinein in Nischen verlegt.

Aber auch hier sind wiederum die Federelemente, in der Form von trapezförmigen Spannbändern, von aussen deutlich ersichtlich.

Auch ist die Länge des Hauptfilmscharnieres wiederum begrenzt auf den Abstand zwischen den beiden Federelementen. Aehnliches gilt auch für die Kunststoff-Verschlüsse gemäss der EP-A-056469. Die Federelemente, die hier entweder Biegefedern oder Zugelemente sind, die mit ihren Nebenfilmscharnieren in ein äusserst kurzes Hauptfilmscharnier hineinlaufen. Dies ergibt einerseits einen unpräzisen Schliessvorgang und vermindert anderseits die Stabilität des Scharniers.

Es ist folglich die Aufgabe der vorliegenden Erfindung, einen Kunststoffverschluss der eingangs genannten Art zu schaffen, bei dem die vorgenannten Nachteile der Kunststoff-Verschlüsse gemäss dem Stand der Technik gemieden werden und der zusätzlich in vielen Gestaltungsformen der Verschlüsse realisiert werden kann.

Diese Aufgabe löst ein Verschluss mit den Merkmalen des Patentanspruches 1. Weisen der erste und der zweite Verschlussteil des Kunststoffverschlusses je gerade, parallel zum Hauptfilmscharnier verlaufende Wandbereiche auf, die mindestens doppelt so lang als die Breite des mindestens einen Federelementes sind, so lässt sich dieser Kunststoffverschluss besonders einfach herstellen. Erfindungsgemäss lassen sich Verschlüsse nach Anspruch 1 mittels dem Verfahren gemäss Patentanspruch 9 realisieren.

Weitere vorteilhafte Ausgestaltungsformen des Erfindungsgegenstandes und vorteilhafte Varianten des Verfahrens zur Herstellung der erfindungsgemässen Verschlüsse gehen aus den abhängigen Ansprüchen hervor.

In der nachfolgenden Beschreibung sind verschiedene Ausführungsformen des erfindungsgemässen Kunststoffverschlusses und deren Herstellungsverfahren anhand der beiliegenden Zeichnungen beispielsweise dargestellt. Es zeigt:
- Figur 1: eine Aufsicht auf einen grossen, rechteckigen Verschluss, ausgestaltet mit einem extrem langen, durchgehenden Hauptfilmscharnier und
- Figur 2: einen Querschnitt durch denselben Verschluss entlang der Linie B-B im Bereich des das Hauptfilmscharnier überbrückenden Federelementes in vergrössertem Massstab
- Figur 3: einen diametralen Querschnitt durch einen runden Verschluss in der vollständig geöffneten Herstellungslage sowie
- Figur 4: dieselbe Ansicht desselben Verschlusses im geschlossenen Zustand, während
- Figur 5: den Verschluss gemäss der Figur 3 in derselben geöffneten Darstellung in der Aufsicht von oben gezeigt ist.
- Figur 6: zeigt eine Ausführungsform des Federelementes eines Verschlusses im Vertikalschnitt parallel zur Hauptfilmscharnierachse und
- Figur 7: einen zweiten Vertikalschnitt durch dasselbe Federelement gemäss der Figur 6 senkrecht zur Verlaufrichtung des Hauptfilmscharnieres.
- Figur 8: dokumentiert eine zweite Ausführungsform eines Federelementes derselben Ansicht wie Figur 6 und
- Figur 9: das Federelement nach Figur 8 in derselben Darstellung wie das Federelement nach Figur 7.
- Figur 10: stellt systematisch einen Horizontalschnitt durch eine Spritzform zur Herstellung eines Kunststoff-Verschlusses mit dem Federelement gemäss der Ausführung nach den Figuren 6 und 7 dar und die
- Figuren 11a bis 11d: verdeutlichen die erfindungsgemässen Verfahrensschritte zur Entformung eines Kunststoff-Verschlusses mit den Federelementen gemäss den Figuren 6 bis 9.

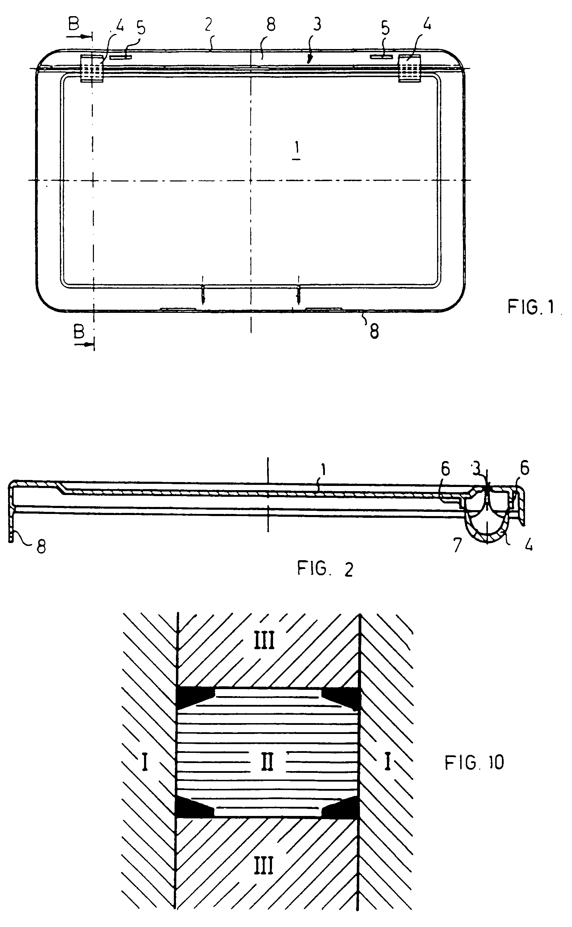

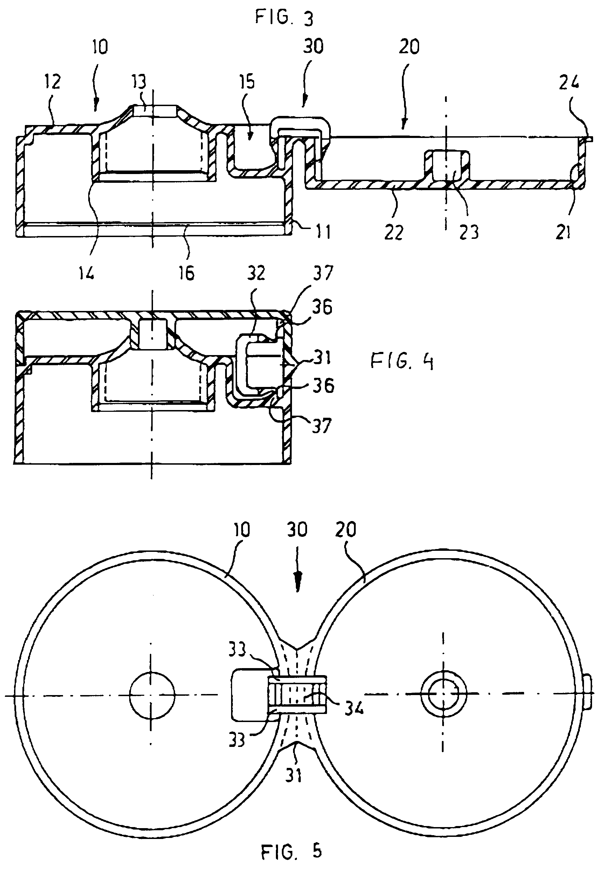

Die beiden detailliert dargestellten Ausführungsformen des Verschlusses gemäss den Figuren 1 und 2 und jener nach den Figuren 3 bis 5 sollen lediglich das weite Spektrum der Ausgestaltungsformen des erfindungsgemässen Kunststoffverschlusses verdeutlichen.

Die Formen weiterer Kunststoff-Verschlüsse, in denen das erfindungsgemässe Prinzip angewendet werden kann, sind nahezu unbegrenzt. Während die erste Ausführungsform gemäss den Figuren 1 und 2 einen Verschluss für einen rechteckigen Behälter, beispielsweise zur Aufnahme von Waschpulver darstellt, ist der Verschluss gemäss den Figuren 3 bis 5 beispielsweise geeignet zur Montage auf einer Kunststoffflasche für Kosmetika oder flüssige bzw. pastöse Lebensmittel.

Der Kunststoffverschluss gemäss der Figur 1 hat eine rechteckige Grundform.

Er ist dargestellt in der Ansicht von unten, das heisst, dass jene Fläche sichtbar ist, die im montierten Zustand des Verschlusses zum Behälterinnenraum weist. Dieser Verschluss ist geeignet, um auf einen offenen, rechteckigen Behälter aufgesetzt zu werden. Er weist einen ersten Teil 1 und einen zweiten Teil 2 auf. Die beiden Verschlussteile 1 und 2 sind über ein durchgehendes Hauptfilmscharnier 3 miteinander verbunden. Zwei U-förmige Federelemente 4 überqueren das Hauptfilmscharnier 3 an zwei verschiedenen, relativ weit auseinanderliegenden Stellen. Der Verschlussteil 2 ist mit zwei, jeweils in der Nachbarschaft der beiden U-förmigen Federelemente angeordnete Befestigungselemente 5 versehen. Die Befestigungselemente 5 dienen der Befestigung des Verschlusses auf dem hier nicht dargestellten rechteckigen Behälter. Auf die Erläuterung der weiteren, hier nicht relevanten Details des Kunststoffverschlusses wird verzichtet.

Aus der Figur 2 ist deutlich erkennbar, dass das U-förmige Federelement 4 über je ein Nebenfilmscharnier 7 an je einem federnden Konsolenaufbau beidseits des Hauptfilmscharnieres 3 einerseits mit dem Verschlussteil 1 und andererseits mit dem Verschlussteil 2 verbunden ist. Das Hauptfilmscharnier 3 und die beiden Nebenfilmscharniere 7 laufen untereinander parallel. Aus der Figur 1 ist zudem ersichtlich, dass der Abstand zwischen den beiden Federelementen 4 ein mehrfaches der Summe der Breite beider Federelemente entspricht.

Insbesondere ist hier der Abstand zwischen zwei benachbarten Federelementen mindestens doppelt so lang als die Breite des mindestens einen Federelementes. Dies ermöglicht es, einen derart ausgestalteten Kunststoffverschluss derart herzustellen, dass die Innenfläche des mindestens einen U-förmigen Federelementes mittels mindestens einem parallel zum Filmscharnier verlaufenden Schieber geformt werden kann. Ein so gestalteter Kunststoffverschluss kann in der Lage gemäss den Figuren 1 und 2, bei dem der erste und der zweite Verschlussteil in derselben Ebene verlaufen, hergestellt werden. Im aufgesetzten Zustand auf einen offenen Behälter entspricht die Lage gemäss den Figuren 1 und 2 dem geschlossenen Zustand.

Neben der hier dargestellten Form kann ein Verschluss mit demselben Aufbau auch in verschiedenen anderen Ausführungsformen gefertigt sein. Insbesondere ist die Lage des Hauptfilmscharnieres 3 in keiner Weise festgelegt.

So kann auch ein solcher Kunststoffverschluss einen runden oder mehreckigen Grundriss aufweisen und das Hauptfilmscharnier kann einen solchen Verschluss in jedwelcher beliebigen Lage überqueren. Hierbei verläuft das Hauptfilmscharnier 3 ohne jeglichen Unterbruch quer über die Verschlussoberfläche.

Auch die Form der Federelemente 4 ist nicht zwingend vorgegeben. Sie müssen lediglich räumlich so gestaltet sein, dass sie mit einem genügenden Zwischenraum das Hauptfilmscharnier 3 überbrücken. Beispielsweise kann die Querschnittsform eines solchen Federelementes U-, V-förmig oder halbzylindrisch sein.

In den Figuren 3 bis 5 ist ein detailliertes Ausführungsbeispiel eines erfindungsgemässen Kunststoffverschlusses dargestellt, welcher zur Befestigung auf ein Behältnis, insbesondere einer Kunststoffflasche mit flüssigem oder pastösem Inhalt geeignet ist. Die drei Hauptbestandteile des Kunststoffverschlusses sind der erste Verschlussteil, welcher den Unterteil 10 bildet, der zweite Verschlussteil, welcher hier die Kappe 20 ist, und das die beiden Verschlussteile einstückig verbindende Scharnier 30. Der Verschlussunterteil 10 hat eine zylindrische Mantelwand 11, welche von einer Deckfläche 12, mit Ausnahme einer Ausgussöffnung 13, vollständig dichtend abgeschlossen ist. An der Innenfläche der zylindrischen Mantelwand 11 ist im unteren Bereich ein Befestigungsmittel 16 zur Halterung des Kunststoffverschlusses auf einen Behälter vorgesehen. Das Befestigungsmittel 16 kann verschiedene Ausgestaltungsformen haben, wie beispielsweise ein Gewinde, Haltenoppen oder wie hier dargestellt eine Ringwulst.

An der Unterseite der Deckfläche 12, konzentrisch zur Ausflussöffnung 13, verläuft eine Ringwand 14, die zur dichtenden Verbindung des Verschlusses mit der Behältermündung dient. Im Bereich zwischen dein noch zu beschreibenden Scharnier 30 und der Ausgussöffnung 13 ist in der Deckfläche 12 eine Mulde 15 eingelassen. Diese bietet Raum für ein Federelement im geschlossenen Zustand des Kunststoffverschlusses. Diese Situation ist deutlich in der Figur 4 erkennbar.

Der zweite Verschlussteil, der hier als Kappe 20 ausgebildet ist, weist ebenfalls eine zylindrische Mantelwand 21 auf, die denselben Durchmesser wie die Mantelwand des Unterteiles 10 hat. Die Kappe 20 wird von einer Deckfläche 22 abgeschlossen.

Zentrisch auf der Innenfläche der Deckfläche 22 ist ein Dichtzapfen 23 angeordnet. Dieser passt schliessend in die Ausgussöffnung 13 des Unterteiles 10. Diametral dem Scharnier 30 gegenüber ist am unteren Rand der Mantelwand 21 eine Aufdrückwulst 24 angeformt. Die Aufdrückwulst 24 dient als Hilfe zur Oeffnung des Kunststoffverschlusses.

Die äussere Gestaltungsform des Kunststoffverschlusses ist keineswegs auf zylindrische Formen beschränkt. So sind beispielsweise mehreckige oder ovale Formen genauso möglich, wie Verschlüsse mit konisch verlaufenden Mantelwänden.

Das gesamthaft mit 30 bezeichnete Scharnier besteht aus zwei Hauptbestandteilen, nämlich dem Hauptfilmscharnier 31 und dem Federelement 32. Das Federelement 32 in der hier dargestellten Ausführungsform ist zum einen aus fertigungstechnischen Gründen und zum andern um die Schnappwirkung auf ein vernünftiges Mass einzustellen, in zwei Teilfederelemente 33 aufgeteilt. Zwischen den beiden Teilfederelementen 33 verbleibt somit ein Zwischenraum 34. Würde man das Federelement 32 des Kunststoffverschlusses wiederum wie bei der vorher beschriebenen Lösung mittels einem Seitenzug oder Schieber in der Spritzform fertigen, so könnte das Federelement 32 durchgehend, d.h. ohne Zwischenraum gestaltet sein, wie das Federelement 4 gemäss den Figuren 1 und 2. Das Federelement 32 ist über Dünnstellen 36, die in der Gestalt als Nebenfilmscharniere geformt sind, einerseits mit dem Unterteil 10 und andererseits mit der Kappe 20 verbunden. Im vollständig geöffneten Zustand des Kunststoffverschlusses liegen die beiden Dünnstellen 36 auf demselben Niveau. Um dies zu erreichen sind sowohl am Unterteil 10 wie auch an der Kappe 20 je eine entsprechende Konsole 37 vorgesehen.

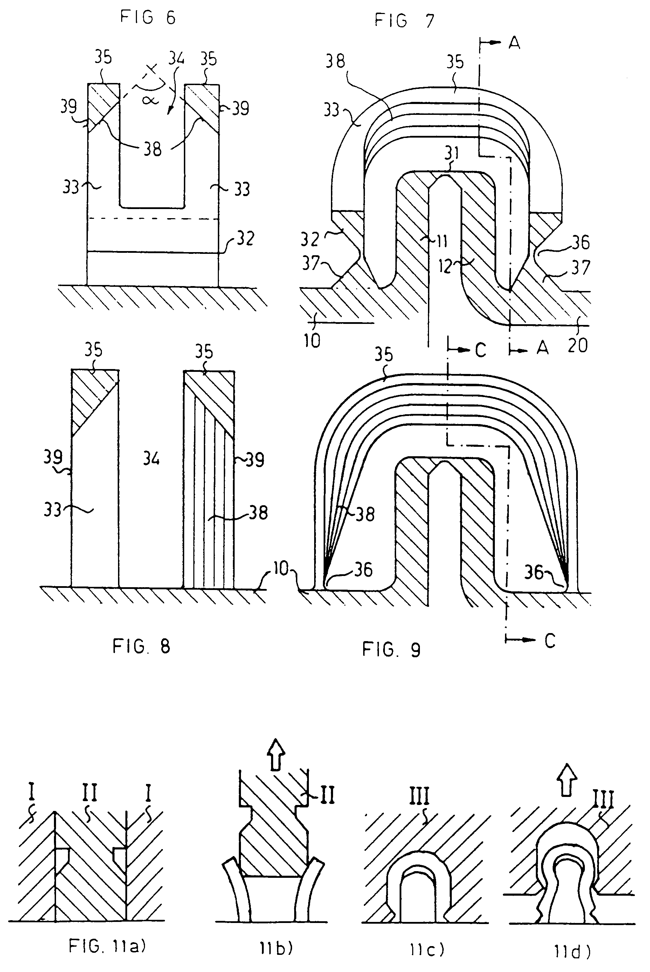

Bezüglich der exakten, räumlichen Ausgestaltungsform der beiden Teilfederelemente 33 wird auf die Figuren 6 bis 9 verwiesen.

Der Kunststoffverschluss gemäss den Figuren 3 bis 5 ist mit einem Scharnier gemäss den Figuren 6 und 7 ausgerüstet. Deutlich erkennt man die beiden Teilfederelemente 33, die gemeinsam das Federelement 32 bilden, welches einerseits über eine Dünnstelle 36 mit dem Unterteil 10 und andererseits über eine Dünnstelle 36 mit der Kappe 20 verbunden ist.

Die beiden Mantelwände 11 und 21 der beiden Verschlussteile sind über das Hauptfilmscharnier 21 miteinander gelenkig verbunden. In der Ansicht gemäss der Figur 6 erkennt man deutlich den Zwischenraum zwischen den beiden Teilfederelementen 33, während in Figur 7 dieser nicht ersichtlich ist, weil die Schnittebene im Zwischenraum 34 verläuft. Die beiden parallel zueinander verlaufenden U-förmigen Teilfederelemente sind so angeordnet, dass der jeweilige Boden des U im vollständig geöffneten Zustand des Kunststoffverschlusses nach oben gerichtet ist. Die Querschnittsfläche der beiden U-förmigen Teilfederelemente 33 ist im Bereich ihrer Böden 35 so gestaltet, dass ihre Dicken von aussen zum Zwischenraum 34 hin abnehmen. Die Innenflächen 38 sind somit zueinander geneigt und schliessen einen spitzen bis stumpfen Winkel alpha ein. Auch die weiteren Elemente des Scharnieres, nämlich die beiden Dünnstellen 36 und die Konsolen 37, sind hier erkennbar. Die äusseren Seitenflächen der beiden Teilfederelemente 33 sind mit 39 gekennzeichnet. Die Kennzeichnung erfolgt insbesondere im Hinblick auf die spätere Erläuterung der Herstellungstechnik.

Während bei der Ausführungsform gemäss den Figuren 6 und 7 die Dünnstellen 36 bezüglich des U an deren Aussenflächen angeordnet sind und die Verbindung zwischen den Konsolen 37 und dem Federelement 32 bilden, sind die Dünnstellen 36 bei der Ausführungsform gemäss den Figuren 8 und 9 gleichzeitig die Anlaschungsstellen des Federelementes 32 am Unterteil 10 bzw. an der Kappe 20. Selbstverständlich könnten sie aber auch hier wiederum die Verbindung mit den Kunststoffverschlussteilen über entsprechende Konsolen herstellen.

Im Gegensatz zur vorher beschriebenen Ausführungsform erfolgt die Einengung zur Bildung der Dünnstellen 36 hier jedoch nicht von der Aussenseite des U-förmigen Federelementes, sondern von deren Innenseite. Damit bei der Entformung die Teilfederelemente 33 nicht abgeschert werden, muss entsprechend der Uebergang von den Dünnstellen 36 zum Boden 35 hin kontinuierlich verlaufen. Während somit bei der vorher beschriebenen Lösung die Schenkel der U-förmigen Teilfederelemente 33 in ihren gerade verlaufenden Bereich einen rechteckigen Querschnitt haben, haben hier diese Schenkel eine kontinuierlich sich verändernde trapezförmige Querschnittsform. Die U-förmigen Teilfederelemente haben folglich über ihre gesamte Länge zwischen den beiden Dünnstellen 36 und dem Unterteil 10 bzw. der Kappe 20 eine in Richtung zum Zwischenraum 34 hin sich verjüngende Querschnittsform. Die Innenflächen 38 der beiden Teilfederelemente 33 verlaufen somit mit Ausnahme im Bereich der Dünnstelle 36 selber immer geneigt zueinander.

Während man bei der Fertigung von relativ grossen Kunststoffverschlüssen genügend Platz hat und folglich ohne weiteres mit Schiebern oder Seitenzügen in der Spritzform arbeiten kann, ist dies bei kleinen Kunststoffverschlüssen zum einen kaum möglich und zum anderen sehr aufwendig, weil es sich hierbei oftmals um Mehrfachwerkzeuge handelt. Je mehr Verschlüsse mit einer einzigen Spritzform gefertigt werden, umso aufwendiger ist es, um bei der Fertigung auch noch mit Schiebern oder Seitenzügen zu arbeiten. Dank der Auslegung der Kunststoffverschlüsse gemäss den Figuren 3 bis 9 ist es jedoch möglich, diese ohne Schieber oder Seitenzüge zu fertigen.

Stattdessen sind die Spritzwerkzeuge mehrteilig gegliedert und die einzelnen Werkzeugteile in einer bestimmten Reihenfolge zum Entformen bewegbar. Komplex ist insbesondere der Bereich des Scharniers. In der Figur 10 ist schematisch dargestellt, wie ein Horizontalschnitt durch ein solches mehrteiliges Werkzeug im Bereiche des Scharnieres aussehen kann. Ein Werkzeugteil I, der im wesentlichen die gesamte Oberflächenstruktur des Unterteiles an der Oberfläche und die Kappe an der Innenfläche formt, begrenzt auch die äusseren Seitenflächen 39 der beiden Teilfederelemente 33. Ein innerer, stempelförmiger Werkzeugteil II formt die inneren Begrenzungsflächen 38 der Teilfederelemente 33. Die äusseren Begrenzungsflächen der beiden Teilfederelemente werden durch einen Werkzeugteil III geformt. Diese Situation ist in den Figuren 11a bis 11d während des Entformungsprozesses nochmals schematisch aufgezeigt. Die vollständig geschlossene Spritzform ist in der Figur 11a erkennbar. Die schwarz ausgefüllten Flächen zeigen die beiden Teilfederelemente im Schnitt im Bereiche der beiden U-Böden. In einem ersten Entformungsschritt wird der Werkzeugteil I entfernt.

Damit stehen die seitlichen Begrenzungsflächen 39 der Teilfederelemente 33 frei. In einem zweiten Schritt kann nun der Werkzeugteil II, welcher die beiden benachbarten Teilfederelemente untergreift, ausgefahren werden. Weil nunmehr die seitliche Begrenzung durch den Werkzeugteil I nicht mehr vorhanden ist, können die beiden Teilfederelemente zur Seite schwenken.

Dies wird nicht zuletzt dadurch ermöglicht, dass die Innenflächen 38 zum Zwischenraum hin geneigt verlaufend geformt sind. In einem letzten Entformungsschritt gemäss den Figuren 11c und d kann nun jener Werkzeugteil, der die äussere Fläche der beiden Teilfederelemente formt, weggezogen werden. Sind die Einschnürungen, die die Dünnstellen bilden, an den Aussenflächen des Federelementes angeordnet, so ist die Entformung erst möglich, wenn die Unterfangung durch den Werkzeugteil II ausgefahren ist. Nur dann lässt sich das U-förmige Federelement beim Entformen völlig frei zusammenpressen und durch die Engstelle in der Gravität des Werkzeugteiles ausfahren. Sind die Federelemente gemäss der Ausführung nach den Figuren 8 und 9 gestaltet, d.h. ohne die Einschnürungen an den Aussenseiten der U-förmigen Federelemente, so lässt sich ein solcher Kunststoffverschluss auch dann entformen, wenn nur zwei relativ zueinander bewegliche Werkzeugteile vorhanden sind. In diesem Fall können die beiden Werkzeugteile II und III gemäss der Figur 10 einstückig ausgebildet sein. Dann wird lediglich in einem ersten Schritt zuerst der Werkzeugteil I weggezogen und danach der zweite Werkzeugteil, wobei wiederum die beiden Teilfederelemente beim Entformen seitlich auseinandergedrückt werden.

Der erfindungsgemässe Kunststoffverschluss ermöglicht die Gestaltung besonders ästhetischer Ausführungsformen und lässt sich auch in der Massenproduktion ohne Mehrkosten fertigen.

## Patentansprüche

1. Kunststoffverschluss bestehend aus einem ersten Teil (10) zur mittelbaren oder unmittelbaren Befestigung auf ein Behältnis und einem als Kappe dienendem zweiten Teil (20), der mit dem ersten Teil über mindestens ein Hauptfilmscharnier (31) einstückig verbunden ist, und dass mindestens ein an beiden Teile angreifendes, die Drehachse des Hauptfilmscharniers überbrückendes U-förmiges Federelement (32) vorhanden ist, welches eine Schnappwirkung erzeugt, dadurch gekennzeichnet, dass das Hauptfilmscharnier (31) im Bereich in dem es vom mindestens einen Federelement (32) überbrückt ist ununterbrochen durchläuft, und dass im geschlossenen Zustand des Verschlusses das Federelement (32) unsichtbar vollständig innerhalb des geschlossenen Verschlusses liegt.

2. Kunststoffverschluss nach Anspruch 1, dadurch gekennzeichnet, dass der Abstand zwischen zwei benachbarten Federelemente (32) mindestens doppelt so lang als die Breite des mindestens eines Federelementes ist.

3. Kunststoffverschluss nach Anspruch 1, dadurch gekennzeichnet, dass das mindestens eine Federelement (32) aus zwei parallel zueinander verlaufenden U-förmigen Teilfederelementen (33) besteht, die einen Zwischenraum (34) frei lassen.

4. Kunststoffverschluss nach Anspruch 3, dadurch gekennzeichnet, dass die Innenflächen (38) der U-förmigen Teilfederelemente (33) mindestens im Bereich der beiden U-Böden (35) zum Zwischenraum (34) zwischen den beiden Teilfederelementen (33) hin geneigt verlaufen, so dass die Dicken der beiden Teilfederelementen zum Zwischenraum hin sich verjüngen.

5. Kunststoffverschluss nach Anspruch 3, dadurch gekennzeichnet, dass die gelenkigen Verbindungen zwischen den Federelementen (31) und dem Unterteil (10) beziehungsweise der Kappe (20) mittels, mindestens annähernd parallel zum Hauptfilmscharnier (31) verlaufenden, in den Aussenflächen der U-förmigen Teilfederelemente (32) angeordneten, Dünnstellen (36) erfolgt.

6. Kunststoffverschluss nach Anspruch 4, dadurch gekennzeichnet, dass die U-förmigen Teilfederelemente (33), zwischen den beiden Dünnstellen (36) und dem Unterteil (10) beziehungsweise der Kappe (20), über ihre gesamte Länge eine in Richtung zum Zwischenraum (34) hin sich verjüngende Querschnittsform aufweist.

7. Kunststoffverschluss nach Anspruch 1, dadurch gekennzeichnet, dass der Unterteil (10) eine Deckfläche (12) mit darin angeordneter Ausgussöffnung (13) aufweist, wobei in der Deckfläche (12) im Bereich zwischen der Ausgussöffnung (13) und dem Hauptfilmscharnier (31) eine geschlossene Mulde (15) angeordnet ist, in der das mindestens eine Federelement (32), im geschlossenen Zustand des Verschlusses, mindestens teilweise Aufnahme findet.

8. Kunststoffverschluss nach Anspruch 1, dadurch gekennzeichent, dass das mindestens eine Federelement (32) über gelenkige Dünnstellen (36) mit dem Unterteil (10) beziehungsweise mit der Kappe (20) verbunden ist, wobei die gelenkigen Dünnstellen (36) auf Konsolen (37) angeordnet sind, die sich einerseits auf einer Deckfläche (12) des Unterteiles und andererseits auf der Innenfläche (22) der Kappe (20) befinden.

9. Verfahren zur Herstellung eines Kunststoffverschlusses nach Anspruch 1, dadurch gekennzeichnet, dass der Verschluss mittels eines mehrteiligen Kerns (I, II, III) gespritzt wird, wobei der Kernteil (II), der das mindestens eine U-förmige Federelement (32) unterfängt, auf der im geschlossenen Zustand des Verschlusses innerhalb des geschlossenen Verschlusses liegenden Seite vollständig oberhalb des ununterbrochenen Hauptfilmscharniers (31) verläuft und kreuzungsfrei mit diesem aus dem mindestens einen U-förmigen Federelement (32) senkrecht oder parallel zur Verlaufsrichtung des Hauptfilmscharniers herausgezogen wird.

10. Verfahren nach Anspruch 9, dadurch gekennzeichnet, dass die Innenfläche (38) des mindestens einen U-förmigen Federelementes (32) mittels mindestens einem parallel zum Hauptfilmscharnier (31) verlaufenden Kernteiles (II) geformt wird, der als Schieber gestaltet ist.

11. Verfahren nach Anspruch 9 zur Herstellung des Kunststoffverschlusses nach Anspruch 3, dadurch gekennzeichnet, dass beim Entformen in einem ersten Schritt jener Formteil (I) entfernt wird, der die Begrenzung der seitlichen Begrenzungsflächen (39), die vom Zwischenraum (34) abgelegen sind, freigibt, und in einem zweiten Schritt den die U-förmigen Teilfederelemente (33) unterfangenden und den Zwischenraum zwischen den Teilfederelementen ausfüllenden Kernteil (II) herausgezogen wird, und dabei vorübergehend die Federelemente seitlich federelastisch verformend in den freigestellten Raum schiebt.

12. Verfahren nach Anspruch 11 zur Herstellung des Kunststoffverschlusses nach Anspruch 5, dadurch gekennzeichnet, dass der Spritzkern (I, II, III) mindestens dreiteilig ist, und dass nach der Entfernung des in den Zwischenraum zwischen den Federelementen hineinragenden Kernteil II ein dritter Kernteil III weggezogen wird, der die äusseren Seitenflächen mit den Dünnstellen bildet, wobei die innen bereits freigestellten Federelemente bei der Entformung kurzzeitig auf die minimale Distanz, zwischen den beiden Dünnstellen, federnd zusammengepresst werden.

## Claims

1. Plastic closure comprising a first part (10) to be fastened directly or indirectly to a container and a second part (20) serving as a cap, which is connected integrally with the first part by means of at least one main integral hinge (31) which has at least one U-shaped spring element (32) engaging both parts, bridging the pivot axis of the main integral hinge and producing a snap effect, characterised in that the main integral hinge (31) is continuous in the area where it is bridged by the one or more spring elements (32), and in that in the closed state of the closure the spring element (32) is located invisibly entirely inside the closed closure.

2. Plastic closure according to Claim 1, characterised in that the distance between two adjacent spring elements (32) is at least twice the width of the one or more spring elements.

3. Plastic closure according to Claim 1, characterised in that the one or more spring elements (32) consist of two U-shaped part-springs (33) running parallel to each other with a gap (34) between them.

4. Plastic closure according to Claim 3, characterised in that the inner faces (38) of the U-shaped part-springs (33) run obliquely in relation to the gap (34) between the two part-springs (33) at least in the area of the two U-bends [?] (35), so that the thicknesses of the two part-springs grow narrower towards the gap.

5. Plastic closure according to Claim 3, characterised in that the hinged connections between the spring elements (31) and the lower part (10) or of the cap (20) are effected by thin sections (36) running at least approximately parallel to the main integral hinge (31) and located in the outer faces of the U-shaped part-springs (32).

6. Plastic closure according to Claim 4, characterised in that the U-shaped part-springs (33) have a cross section which narrows towards the gap (34) over their entire length between the two thin sections (36) and the lower part (10) or the cap (20).

7. Plastic closure according to Claim 1, characterised in that the lower part (10) has a closing face (12) with a pouring aperture (13) located in it, a closed cavity (15) being located in the closing face (12) in the area between the pouring aperture (13) and the main integral hinge (31), in which cavity the one or more spring elements (32) are at least partly accommodated in the closed state of the closure.

8. Plastic closure according to Claim 1, characterised in that the one or more spring elements (32) are connected to the lower part (10) or to the cap (20) by means of flexible thin sections (36), the flexible thin sections (36) being located on brackets (37) which are located at one side on a closing face (12) of the lower part and on the other side on the inner face (22) of the cap (20).

9. Procedure for producing a plastic closure according to Claim 1, characterised in that the closure is injection moulded using a multi-part core (I, II, III), the core part (II), which supports the one or more U-shaped spring elements (32), running completely above the continuous integral hinge (31) on the side located inside the closed closure in the closed state of the closure, and being withdrawn with it, without intersection, from the one or more U-shaped spring elements (32) in a direction perpendicular or parallel to the axis of the main integral hinge.

10. Procedure according to Claim 9, characterised in that the inner face (38) of the one or more U-shaped spring elements (32) is formed by at least one core part (II) formed as a sliding bar and running parallel to the main integral hinge (31).

11. Procedure according to Claim 9 for producing the plastic closure according to Claim 3, characterised in that, when removing the mould, the mould part (I), which exposes the demarcation of the lateral limiting faces (39) facing away from the gap (34), is removed in a first step, and the core part (II) supporting the U-shaped part-springs (33) and filling the gap between the part-springs is withdrawn in a second step, while temporarily pushing the elastically deforming spring elements sideways into the vacated space.

12. Procedure according to Claim 11 for producing the plastic closure according to Claim 5, characterised in that the mould core (I, II, III) has at least three parts, and in that, after removal of the core part II, which projects into the gap between the spring elements, a third core part III forming the outer side faces with the thin sections is removed, while the spring elements, which have already been exposed on their inner sides, are briefly pressed together elastically over the minimal distance between the two thin sections, as the mould is removed.

## Revendications

1. Fermeture en matière plastique, constituée d'une première partie (10) pour la fixation directe ou indirecte sur un récipient et d'une deuxième partie (20) servant de capuchon, qui est reliée d'un seul tenant à la première partie par l'intermédiaire d'au moins une charnière pelliculaire principale (31), et dans laquelle est présent au moins un élément de ressort (32) en forme de U, agissant sur les deux parties, surmontant l'axe de rotation de la charnière pelliculaire principale et produisant un effet de déclic, **caractérisée** en ce que la charnière pelliculaire principale (31) s'étend de façon ininterrompue dans la région dans laquelle elle est surmontée par le ou les éléments de ressort (32), et en ce qu'à l'état fermé de la fermeture, l'élément de ressort (32) est invisible, totalement à l'intérieur de la fermeture fermée.

2. Fermeture en matière plastique selon la revendication 1, **caractérisée** en ce que la distance entre deux éléments de ressort voisins (32) est au moins égale au double de la largeur du ou de chaque élément de ressort.

3. Fermeture en matière plastique selon la revendication 1, **caractérisée** en ce que le ou chaque élément de ressort (32) est constitué d'au moins deux éléments partiels de ressort (33) en forme de U s'étendant parallèlement entre eux, qui laissent libre un espace intermédiaire (34).

4. Fermeture en matière plastique selon la revendication 3, **caractérisée** en ce que les faces intérieures (38) des éléments partiels de ressort (33) en forme de U s'étendent, au moins dans la région des deux fonds de U (35), en inclinaison vers l'espace intermédiaire (34) entre les deux éléments partiels de ressort (33), de sorte que les épaisseurs des deux éléments partiels de ressort se rétrécissent en direction de l'espace intermédiaire.

5. Fermeture en matière plastique selon la revendication 3, **caractérisée** en ce que les liaisons articulées entre les éléments de ressort (32) et la partie inférieure (10) ou, respectivement, le capuchon (20) s'effectuent au moyen de régions amincies (36), disposées dans les faces extérieures des éléments partiels de ressort (33) en forme de U et s'étendant au moins approximativement parallèlement à la charnière pelliculaire principale (31).

6. Fermeture en matière plastique selon la revendication 4, **caractérisée** en ce que les éléments partiels de ressort (33) en forme de U présentent sur toute leur longueur, entre les deux régions amincies (36) et la partie inférieure (10) ou, respectivement, le capuchon (20), une forme de section se rétrécissant en direction de l'espace intermédiaire (34).

7. Fermeture en matière plastique selon la revendication 1, **caractérisée** en ce que la partie inférieure (10) présente une face de recouvrement (12) dans laquelle est disposée une ouverture de déversement (13), une cuvette fermée (15) étant disposée dans la face de recouvrement (12) dans la région située entre l'ouverture de déversement (13) et la charnière pelliculaire principale (31), cuvette dans laquelle le ou les éléments de ressort (32) se logent au moins partiellement à l'état fermé de la fermeture.

8. Fermeture en matière plastique selon la revendication 1, **caractérisée** en ce que le ou les éléments de ressort (32) sont reliés au moyen de régions amincies articulées (36) à la partie inférieure (10) ou, respectivement, au capuchon (20), les régions amincies articulées (36) étant disposées sur des consoles (37) qui se trouvent d'une part sur une face de recouvrement (12) de la partie inférieure et d'autre part sur la face intérieure (22) du capuchon (20).

9. Procédé de fabrication d'une fermeture en matière plastique selon la revendication 1, **caractérisé** en ce que la fermeture est moulée par injection au moyen d'un noyau en plusieurs parties (I, II, III), la partie de noyau (II), qui soutient le ou les éléments de ressort (32) en forme de U, s'étendant entièrement au-dessus de la charnière pelliculaire principale interrompue (31), sur le côté se trouvant à l'intérieur de la fermeture fermée à l'état fermé de la fermeture, et étant retirée du ou des éléments de ressort (32) en forme de U sans intersection avec cette charnière, perpendiculairement ou parallèlement à la direction de développement de la charnière pelliculaire principale.

10. Procédé selon la revendication 9, **caractérisé** en ce que la face intérieure (38) du ou des éléments de ressort (32) en forme de U est formée au moyen d'au moins une partie de noyau (II) s'étendant parallèlement à la charnière pelliculaire principale (31), partie qui est conçue comme tiroir.

11. Procédé selon la revendication 9 pour la fabrication de la fermeture en matière plastique selon la revendication 3, **caractérisé** en ce que, lors du démoulage, on enlève au cours d'une première étape la partie de noyau (I), qui dégage la délimitation des faces de délimitation latérales (39) qui sont opposées à l'espace intermédiaire (34), et on retire au cours d'une deuxième étape la partie de noyau (II), qui soutient les éléments partiels de ressort (33) en forme de U et remplit l'espace intermédiaire entre les éléments partiels de ressort, en poussant alors provisoirement les éléments de ressort latéralement, sous déformation en élasticité de ressort, dans l'espace libéré.

12. Procédé selon la revendication 11 pour la fabrication de la fermeture en matière plastique selon la revendication 5, **caractérisé** en ce que le noyau de moulage par injection (I, II, III) est au moins en trois parties, et en ce qu'après avoir enlevé la partie de noyau (II), qui s'enfonce dans l'espace intermédiaire entre les éléments de ressort, on retire une troisième partie de noyau (III), qui forme les faces latérales extérieures pourvues des régions amincies, les éléments de ressort déjà intérieurement dégagés étant, lors du démoulage, temporairement comprimés élastiquement à la distance minimale entre les deux régions amincies.
